# EUROPEAN PATENT SPECIFICATION

(11) **EP 4 063 940 B1**
(45) Date of publication and mention of the grant of the patent: **25.06.2025**
(21) Application number: 20913943.5
(22) Date of filing: 28.09.2020
(51) Int. Cl.: G02B 27/20, G02B 5/20, G02B 27/14

(54) **LIGHT-SPLITTING FLAT PANEL, LIGHT-SPLITTING DEVICE, LIGHT-SPLITTING LENS, CAMERA, AND ELECTRONIC DEVICE**
LICHTTEILENDE FLACHE PLATTE, LICHTTEILENDE VORRICHTUNG, LICHTTEILENDE LINSE, KAMERA UND ELEKTRONISCHE VORRICHTUNG
PANNEAU PLAT DE SÉPARATION DE LUMIÈRE, DISPOSITIF DE SÉPARATION DE LUMIÈRE, LENTILLE DE SÉPARATION DE LUMIÈRE, DISPOSITIF DE PRISE DE VUES ET DISPOSITIF ÉLECTRONIQUE

(30) Priority: 14.01.2020 CN 202010036850; 27.03.2020 CN 202010235860
(43) Date of publication of application: 28.09.2022
(73) Proprietor: Huawei Technologies Co., Ltd., Shenzhen, Guangdong 518129 (CN)
(72) Inventor: LIU, Jun, Shenzhen, Guangdong 518129 (CN); CHEN, Yong, Shenzhen, Guangdong 518129 (CN); LI, Can, Shenzhen, Guangdong 518129 (CN); LI, Mingxuan, Shenzhen, Guangdong 518129 (CN)
(74) Representative: Isarpatent
(86) International application number: PCT/CN2020/118581
(87) International publication number: WO 2021/143204

(56) References cited:
- CN-A- 101 510 007
- CN-A- 101 510 007
- CN-A- 102 495 474
- CN-A- 102 495 474
- CN-A- 102 736 153
- CN-A- 102 736 153
- CN-A- 104 856 653
- CN-A- 104 856 653
- CN-A- 109 445 116
- CN-A- 109 445 116
- CN-U- 203 414 717
- CN-U- 203 414 717
- CN-U- 209 055 730
- TW-A- 201 348 758
- US-A- 5 193 025
- US-A- 5 600 487
- US-A1- 2010 193 412

## Description

### TECHNICAL FIELD

This application relates to the field of electronic device technologies, and in particular, to a beam splitter plate, a beam splitter apparatus, a beam splitter lens module, a camera, and an electronic device.

### BACKGROUND

Low-illumination cameras are widely applied to military, security protection, public safety, and other fields because they can still capture clear images under low-illumination conditions.

Currently, most low-illumination cameras need to use an infrared lamp to supplement light in a low-illumination scenario, so that scene brightness can be improved. However, after the infrared lamp is used to supplement light, light collected by the camera includes visible light and near-infrared light. Wavelengths of the visible light and the near-infrared light differ greatly. If the two are mixed together, a captured image is subjected to a severe color cast. To enable the low-illumination camera to output a color image with realistic colors, a beam splitter structure may be added to a transmission path of an imaging beam of the low-illumination camera, to split an imaging beam formed by focusing by an imaging lens module into visible light and near-infrared light, so that the visible light and the near-infrared light can be separately processed and then fused. In this way, the low-illumination camera can output a color image with realistic colors. However, in the low-illumination camera, the addition of the beam splitter structure inevitably introduces a chromatic aberration and an off-axis aberration. To ensure quality of the color image output by the low-illumination camera, a parameter of another optical structure (such as the imaging lens module) in an imaging beam path needs to be changed to balance the chromatic aberration and the off-axis aberration, so as to minimize an overall chromatic aberration and off-axis aberration caused by structures in the imaging beam path of the camera. Moreover, a larger chromatic aberration and off-axis aberration introduced by the beam splitter structure indicate greater difficulty in adjusting the parameter of the another optical structure, and greater difficulty in correcting the chromatic aberration and the off-axis aberration of the camera.

CN 102 495 474 A discloses a visible light/long-wave infrared broad band spectrum joint focusing optical imaging system.

CN 203 414 717 U discloses a device for the frequency-division processing of short wave infrared and visible light of shooting/photographing equipment.

CN 209 055 730 U discloses a camera module. The camera module comprises a lens and a shell.

CN 104 856 653 A discloses a device and a method for detecting a blood vessel. The device comprises a visible light source, an optical fiber coupler, a lighting optical fiber, an imaging receiving channel, an infrared beam splitter, a far infrared lens zoom system, a far infrared detector, a visible light lens zoom system, a visible light image sensor and an image processing system.

CN 109 445 116 A discloses a thermal image low-light fusion objective optical system.

CN 101 510 007 A discloses a device for real time taking and self-adaptive fusion of infrared light images and visible light images.

CN 102 736 153 A discloses an infrared cut-off filter with a low-angle effect.

US 5 600 487 A discloses a dichroic mirror having a first portion including an H material layer having a high refractive index, and an M material layer having an intermediate refractive index, the H material layer and the M material layer being laminated repeatedly; and a second portion including an H material layer having a high refractive index, and an L material layer having a low refractive index, the H material layer and the L material layer being laminated repeatedly.

US 5 193 025 A discloses an optical and infrared tracking system for use in a missile launcher to split the optical information received from a target into visible light portions and near infrared components.

US 2010/193412 A1 discloses a device for splitting light between the visible light spectrum and the near infrared light spectrum, particularly for separating reflected light between the visible light spectrum and the near infrared light spectrum, in determining multiple characteristics of product in a product scanning system.

### SUMMARY

Embodiments of this application provide a beam splitter apparatus, a beam splitter lens module, a camera, and an electronic device, to reduce a chromatic aberration and an off-axis aberration introduced by a beam splitter structure, and reduce difficulty in correcting a chromatic aberration and an off-axis aberration of a camera.

To achieve the foregoing objective, the invention is defined by the features of the independent claims. Preferred features are defined in the dependent claims.

### BRIEF DESCRIPTION OF DRAWINGS

FIG. 1 is a diagram of an imaging beam path of a camera according to some embodiments of this application;
FIG. 2 is a schematic diagram of a structure of a beam splitter structure of a camera according to some embodiments of this application;
FIG. 3 is a schematic diagram of a structure of a beam splitter structure of a camera according to some other embodiments of this application;
FIG. 4 is a schematic diagram of a structure of a beam splitter structure of a camera according to some other embodiments of this application;
FIG. 5 is a schematic diagram of a structure of a camera according to some embodiments of this application;
FIG. 6 is a schematic diagram of a structure of a beam splitter lens module according to some embodiments of this application;
FIG. 7 is a cutaway drawing of an imaging lens module of the beam splitter lens module shown in FIG. 6;
FIG. 8 is a cutaway drawing of a beam splitter apparatus of the beam splitter lens module shown in FIG. 6;
FIG. 9 is a schematic diagram of a structure of a beam splitter plate which is not an embodiment of this application;
FIG. 10 is a schematic diagram of a structure of a beam splitter plate which is not an embodiment of this application;
FIG. 11 is a schematic diagram of a structure of a beam splitter plate which is not an embodiment of this application;
FIG. 12 is a schematic diagram of a structure of a beam splitter plate which is not an embodiment of this application;
FIG. 13 is a schematic diagram of a structure of a beam splitter plate according to some embodiments of this application;
FIG. 14 is a schematic diagram of a structure of a beam splitter plate according to some other embodiments of this application;
FIG. 15 is a schematic diagram of a structure of a beam splitter plate according to some other embodiments of this application;
FIG. 16 is a schematic diagram of a structure of a beam splitter plate according to some other embodiments of this application;
FIG. 17 is a schematic diagram of a structure of a beam splitter plate according to some other embodiments of this application;
FIG. 18 is a cutaway drawing of the beam splitter lens module shown in FIG. 6;
FIG. 19 is a schematic diagram of a structure of a beam splitter lens module according to some other embodiments of this application;
FIG. 20 is a cutaway drawing of the beam splitter lens module shown in FIG. 19; and
FIG. 21 is a cutaway drawing of a structure of a beam splitter lens module according to some other embodiments of this application.

### Reference signs:

01: imaging lens module; 02: beam splitter structure; 021: first right angle prism; 0211: first right angle surface; 0212: second right angle surface; 0213: first inclined surface; 022: second right angle prism; 0221: third right angle surface; 0222: fourth right angle surface; 0223: second inclined surface; 023: beam splitter film; 03: visible light sensor; 04: near-infrared light sensor; 05: image fusion module; 1: beam splitter lens module; 11: imaging lens module; 111: lens barrel; 112: imaging lens group; 12: beam splitter apparatus; 121: housing; 122: connecting structure; 10: beam splitter plate; 101: transmissive plate; 1011: first surface; 1012: second surface; 101a: first transmissive plate; 1011a: first surface; 1012a: second surface; 101b: second transmissive plate; 1011b: first surface; 1012b: second surface; 102: beam splitter film; 103: first antireflective film; 104: second antireflective film; 105: third antireflective film; 106: fourth antireflective film; 107: fifth antireflective film; 108: sixth antireflective film; 123: visible light sensor; 124: near-infrared light sensor; and 2: camera host.

### DESCRIPTION OF EMBODIMENTS

The terms "first" and "second" in the embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

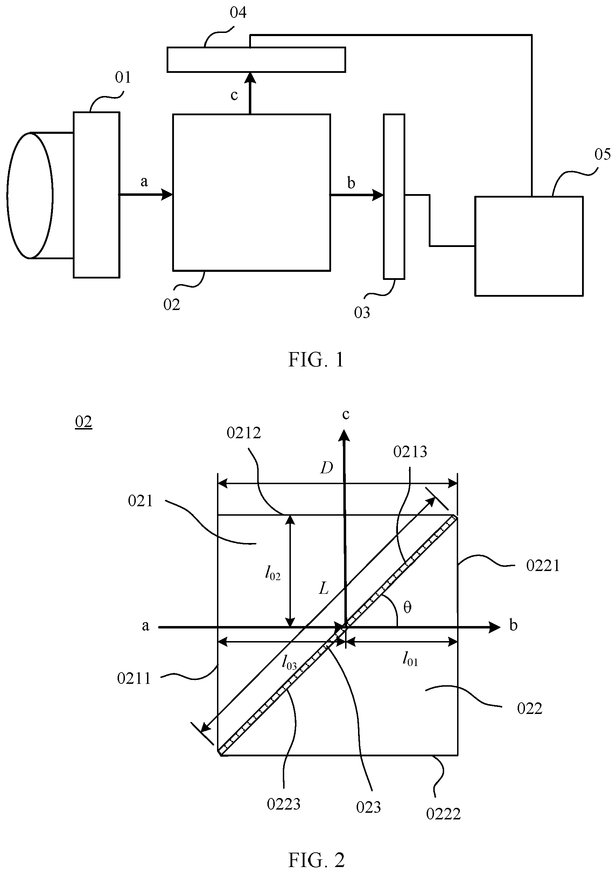

FIG. 1 is a diagram of an imaging beam path of a camera according to some embodiments of this application. The camera is a low-illumination camera, and the camera can output a color image. As shown in FIG. 1, an imaging lens module 01 focuses and forms an imaging beam a. The imaging beam a is incident into a beam splitter structure 02, and is split into visible light b and near-infrared light c by the beam splitter structure 02. The visible light b is incident into a visible light sensor 03, and the visible light sensor 03 converts the visible light b into a visible light signal. The near-infrared light c is incident into a near-infrared light sensor 04, and the near-infrared light sensor 04 converts the near-infrared light c into a luminance signal. Both the visible light sensor 03 and the near-infrared light sensor 04 are connected to an image fusion module 05, and the image fusion module 05 separately processes the visible light signal and the luminance signal, and fuses a processed visible light signal and a processed luminance signal.

It can be learned from FIG. 1 that the beam splitter structure 02 is located in a transmission path of the imaging beam of the camera. FIG. 2 is a schematic diagram of a structure of the beam splitter structure 02 according to some embodiments of this application. As shown in FIG. 2, the beam splitter structure 02 includes a beam splitter film 023, and a first right angle prism 021 and a second right angle prism 022 that are configured to support the beam splitter film 023. The first right angle prism 021 has a first right angle surface 0211, a second right angle surface 0212, and a first inclined surface 0213. The second right angle prism 022 has a third right angle surface 0221, a fourth right angle surface 0222, and a second inclined surface 0223. The first inclined surface 0213 and the second inclined surface 0223 are disposed in parallel and opposite to each other, and the beam splitter film 023 is sandwiched between the first inclined surface 0213 and the second inclined surface 0223. The imaging beam a focused by the imaging lens module is incident into the beam splitter structure 02 from the first right angle surface 0211 along a direction perpendicular to the first right angle surface 0211. After the visible light b and the near-infrared light c in the imaging beam a are separated by the beam splitter film 023, the visible light b is emergent out of the beam splitter structure 02 from the third right angle surface 0221 along a direction perpendicular to the third right angle surface 0221, and the near-infrared light c is emergent out of the beam splitter structure 02 from the second right angle surface 0212.

When an inclination angle *θ* of the beam splitter film 023 is equal to 45°, as shown in FIG. 2, the separated near-infrared light c is emergent out of the beam splitter structure 02 from the second right angle surface 0212 along a direction perpendicular to the second right angle surface 0212. A transmission path length *l*₀₂ of the separated near-infrared light c in the first right angle prism 021 is equal to a transmission path length *l*₀₁ of the separated visible light b in the second right angle prism 022.

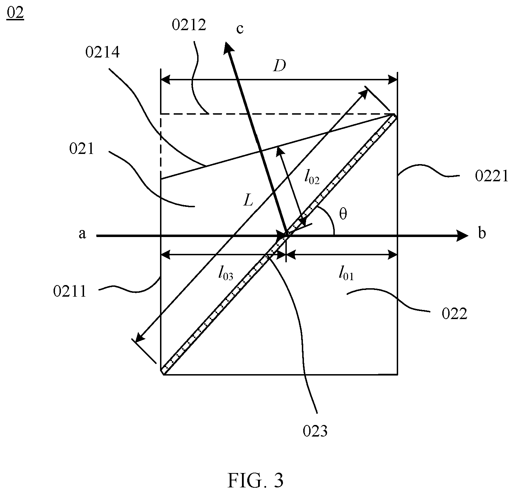

When the inclination angle *θ* of the beam splitter film 023 is greater than 45°, as shown in FIG. 3, a part that is of the first right angle prism 021 and that is adjacent to the second right angle surface 0212 is cut off, and the part cut off is a part enclosed by a dashed line shown in FIG. 3. In this way, the separated near-infrared light c can be emergent out of the beam splitter structure 02 from a surface 0214 formed after the cutting and along a direction perpendicular to the surface 0214, and a transmission path length *l*₀₂ of the separated near-infrared light c in the first right angle prism 021 is equal to a transmission path length *l*₀₁ of the separated visible light b in the second right angle prism 022.

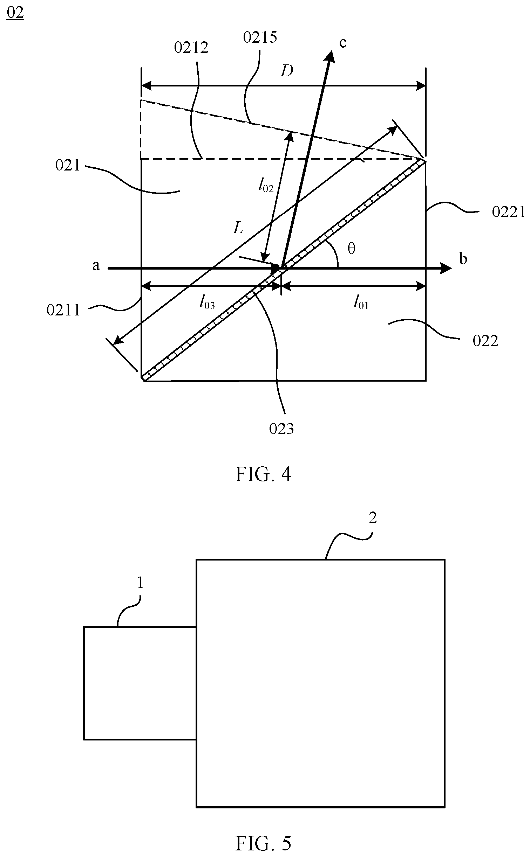

When the inclination angle *θ* of the beam splitter film 023 is less than 45°, as shown in FIG. 4, a region that is on the first right angle prism 021 and that is adjacent to the second right angle surface 0212 is supplemented with a part of a prism, and the supplementary part is a part enclosed by a dashed line shown in FIG. 4. In this way, the separated near-infrared light c can be emergent out of the beam splitter structure 02 from a surface 0215 formed after the supplementation and along a direction perpendicular to the surface 0215, and a transmission path length *l*₀₂ of the separated near-infrared light c in the first right angle prism 021 is equal to a transmission path length *l*₀₁ of the separated visible light b in the second right angle prism 022.

In the embodiment shown in FIG. 2, FIG. 3, or FIG. 4, a transmission path length of the visible light in the imaging beam a in the beam splitter structure 02 is *L*₀₁=*l*₀₃₊*l*₀₁= *D = L* × cos *θ* . A transmission path length of the near-infrared light in the imaging beam a in the beam splitter structure 02 is *L*₀₂=*l*₀₃+*l*₀₂=*l*₀₃+*l*₀₁= *D = L* × cos *θ* . It can be learned from above that *L*₀₁=*L*₀₂, and both *L*₀₁, and *L*₀₂ are equal to a projection length of the beam splitter film 023 on an optical axis of the imaging beam a. *l*₀₃ is a transmission path length of the imaging beam a in the first right angle prism 021 before the imaging beam a is incident into the beam splitter film 023. D is a thickness of the beam splitter structure 02 along the optical axis direction of the imaging beam. To ensure that the first right angle prism 021 and the second right angle prism 022 can be obtained by processing, a dimension of *D* is usually in centimeters. *L* is a width of the beam splitter film 023 in an inclination direction of itself. *L* × cos *θ* represents the projection length of the beam splitter film 023 on the optical axis of the imaging beam a. An optical path of the visible light in the imaging beam a in the beam splitter structure 02 is D₀₁*= n*₀ × *L*₀₁ . An optical path of the near-infrared light in the imaging beam a in the beam splitter structure 02 is D₀₂*= n*₀ × *L*₀₂ . A material of the first right angle prism 021 is the same as a material of the second right angle prism 022, and *n*₀ is a refractive index of the material of the first right angle prism 021 or the second right angle prism 022. The visible light and the near-infrared light in the imaging beam a have relatively long optical paths when transmitted in the beam splitter structure 02, which causes a relatively large chromatic aberration and off-axis aberration, and make it relatively difficult to correct a chromatic aberration and an off-axis aberration of the camera.

To resolve the foregoing problem, this application provides an electronic device. The electronic device includes but is not limited to a mobile phone terminal, an in-vehicle terminal, and a smart wearable device, the electronic device includes a camera, and the camera is a low-illumination camera that can output a color image.

This application provides a camera. FIG. 5 is a schematic diagram of a structure of a camera according to some embodiments of this application. As shown in FIG. 5, the camera includes a beam splitter lens module 1. The beam splitter lens module 1 is configured to focus to form an imaging beam, and split the imaging beam into visible light and near-infrared light.

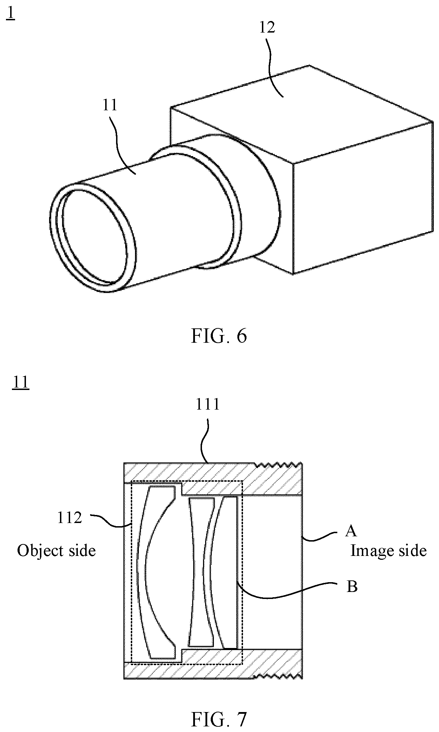

FIG. 6 is a schematic diagram of a structure of the beam splitter lens module 1 according to some embodiments of this application. As shown in FIG. 6, the beam splitter lens module 1 includes an imaging lens module 11 and a beam splitter apparatus 12. The imaging lens module 11 is configured to focus to form an imaging beam. The imaging lens module 11 may be a common C/CS lens module with a relatively long back focal length, or may be a fixed-focus or zoom lens module. This is not specifically limited herein. The beam splitter apparatus 12 is configured to split the imaging beam formed by focusing by the imaging lens module 11 into visible light and near-infrared light.

FIG. 7 is a cutaway drawing of the imaging lens module of the beam splitter lens module shown in FIG. 6. As shown in FIG. 7, the imaging lens module 11 includes a lens barrel 111 and an imaging lens group 112 disposed in the lens barrel 111. The lens barrel 111 is configured to fix the imaging lens group 112. A material of the lens barrel 111 includes but is not limited to metal and plastic. The lens barrel 111 has an image side end A, and the image side end A is an end that is of the lens barrel 111 and that is close to an image side. The imaging lens group 112 includes at least one lens, the imaging lens group 112 is configured to focus to form an imaging beam, the imaging lens group 112 has an image side surface B, and the image side surface B is a surface that is of the imaging lens group 112 and that faces the image side.

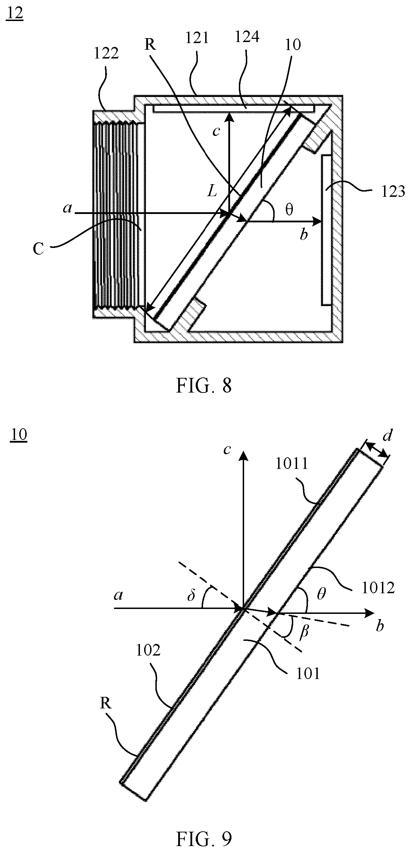

FIG. 8 is a cutaway drawing of the beam splitter apparatus of the beam splitter lens module shown in FIG. 6. As shown in FIG. 8, the beam splitter apparatus 12 includes a housing 121, a connecting structure 122, and a beam splitter plate 10. A material of the housing 121 includes but is not limited to metal and plastic, and the housing 121 is provided with a light inlet C. The connecting structure 122 is disposed on a housing edge at the light inlet C, and the connecting structure 122 includes but is not limited to a screw thread and a buckle. The beam splitter plate 10 is disposed obliquely in the housing 121, and the beam splitter plate 10 can separate visible light from near-infrared light in an imaging beam incident from the light inlet C.

An embodiment of this application provides a beam splitter plate 10. The beam splitter plate 10 includes a transmissive plate and a beam splitter film. The transmissive plate is a light-transmitting plate-like structure. The beam splitter film is supported on the transmissive plate and is parallel to the transmissive plate. The beam splitter film is configured to reflect visible light and transmit near-infrared light, or the beam splitter film is configured to reflect near-infrared light and transmit visible light. A thickness *d* of the transmissive plate satisfies that when the beam splitter plate is disposed obliquely in a transmission path of the imaging beam of the camera, transmission path lengths of visible light and near-infrared light in the imaging beam in the transmissive plate are both less than a projection length of the beam splitter film on an optical axis of the imaging beam.

In the beam splitter plate provided in this embodiment of this application, because the beam splitter film is configured to reflect visible light and transmit near-infrared light, or the beam splitter film is configured to reflect near-infrared light and transmit visible light, visible light and near-infrared light in an imaging beam path can be separated by using the beam splitter film. Moreover, the beam splitter film is supported on the transmissive plate and is parallel to the transmissive plate, and the thickness *d* of the transmissive plate satisfies that when the beam splitter plate is disposed obliquely in the transmission path of the imaging beam of the camera, the transmission path lengths of the visible light and the near-infrared light in the imaging beam in the transmissive plate are both less than the projection length of the beam splitter film on the optical axis of the imaging beam. Assuming that an inclination angle of the beam splitter plate is *θ*, and a width of the beam splitter film along an inclination direction of the beam splitter plate is *L*, the projection length of the beam splitter film on the optical axis of the imaging beam a is *L* × cos*θ* . When the beam splitter film is disposed at the same inclination angle in the transmission path of the imaging beam a and supported by two right angle prisms, as shown in FIG. 2, FIG. 3, or FIG. 4, transmission path lengths of the visible light and the near-infrared light in the imaging beam in the two right angle prisms are *L*₀₁ and *L*₀₂, *L*₀₁*=L*₀₂, and *L*₀₁ and *L*₀₂ are both equal to *L* × cos*θ* . It can be learned from above that the transmission path lengths of the visible light and the near-infrared light in the imaging beam are both less than *L*₀₁ or *L*₀₂. When a material used for the beam splitter plate is the same as the material of the first right angle prism 021 or the second right angle prism 022 in the embodiment shown in FIG. 2, FIG. 3, or FIG. 4, the visible light and the near-infrared light in the imaging beam have relatively short optical paths when transmitted in the transmissive plate, which causes a relatively small chromatic aberration and off-axis aberration, and helps reduce difficulty in correcting a chromatic aberration and an off-axis aberration of the camera.

It should be noted that, in the description of this embodiment of this application, because a thickness of the beam splitter film is very small, the thickness of the beam splitter film is ignored.

Specifically, FIG. 9 is a schematic diagram of a structure of a beam splitter plate 10 which is not an embodiment of this application. As shown in FIG. 9, the beam splitter plate 10 includes a transmissive plate 101 and a beam splitter film 102. A material of the transmissive plate 101 includes but is not limited to optical glass. The transmissive plate 101 has a first surface 1011 and a second surface 1012 opposite to each other, and the first surface 1011 and the second surface 1012 are perpendicular to a thickness direction of the transmissive plate 101. The beam splitter film 102 is disposed on the first surface 1011. The structure is simple and is easy to implement.

When the beam splitter plate 10 described in the foregoing example is mounted in the imaging beam path, and the imaging beam a is incident from a surface that is on the beam splitter film 102 and that is in a direction away from the transmissive plate 101 (that is, a light receiving surface R of the beam splitter plate 10), as shown in FIG. 9, the imaging beam *a* is incident into the beam splitter plate 10 from the light receiving surface R. The beam splitter film 102 reflects one (for example, near-infrared light *c*) of the near-infrared light and the visible light in the imaging beam, and transmits the other (for example, visible light *b*) of the near-infrared light and the visible light. The near-infrared light c does not pass through the transmissive plate 101, and a transmission path length of the near-infrared light c in the beam splitter plate 10 is *L*₂=0. The visible light *b* passes through the beam splitter plate 10, and a transmission path length of the visible light b in the beam splitter plate 10 is *L*₁*= d*/cos *β .* According to a light refraction law, *n=*sin *δ*/sin *β* . δ=90°-*θ* can be learned from FIG. 9. *L*₁*= d* × *n*/sin *θ* can be deduced from that. *n* is a refractive index of the material of the transmissive plate 101. Because the thickness *d* of the transmissive plate 101 satisfies that the transmission path lengths of the visible light and the near-infrared light in the imaging beam a are both less than the projection length of the beam splitter film 102 on the optical axis of the imaging beam a, and the projection length of the beam splitter film 102 on the optical axis of the imaging beam a is *L* × cos *θ* , *L*₁*= d* × *n*/sin *θ <L* × cos *θ* , and *L*₂*=*0*< L* × cos *θ* , from which *d< L* sin *θ* cos*θ*/*n* can be deduced. Therefore, in the embodiment shown in FIG. 9, the thickness *d* of the transmissive plate 101 satisfies that the transmission path lengths of the visible light and the near-infrared light in the imaging beam a are both less than the projection length of the beam splitter film 102 on the optical axis of the imaging beam a, that is, the thickness *d* of the transmissive plate 101 satisfies *d*< *L* sin *θ* cos *θ*/*n .*

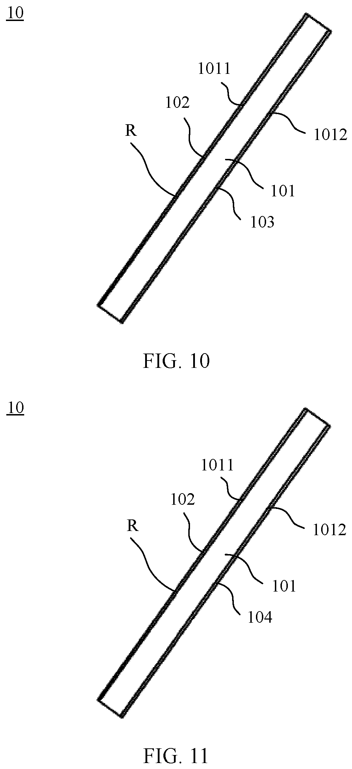

When the beam splitter film 102 is configured to reflect near-infrared light and transmit visible light, to increase a transmittance of the visible light at the second surface 1012 of the transmissive plate 101, in some examples, as shown in FIG. 10, the beam splitter plate 10 further includes a first antireflective film 103. The first antireflective film 103 is attached to the second surface 1012. The first antireflective film 103 is configured to increase a transmittance of visible light emergent out of the transmissive plate 101 from the second surface 1012, and the transmitted visible light passes through the first antireflective film 103.

When the beam splitter film 102 is configured to reflect visible light and transmit near-infrared light, to increase a transmittance of the near-infrared light at the second surface 1012 of the transmissive plate 101, in some examples, as shown in FIG. 11, the beam splitter plate 10 further includes a second antireflective film 104. The second antireflective film 104 is attached to the second surface 1012. The second antireflective film 104 is configured to increase a transmittance of near-infrared light emergent out of the transmissive plate 101 from the second surface 1012, and the transmitted near-infrared light passes through the second antireflective film 104.

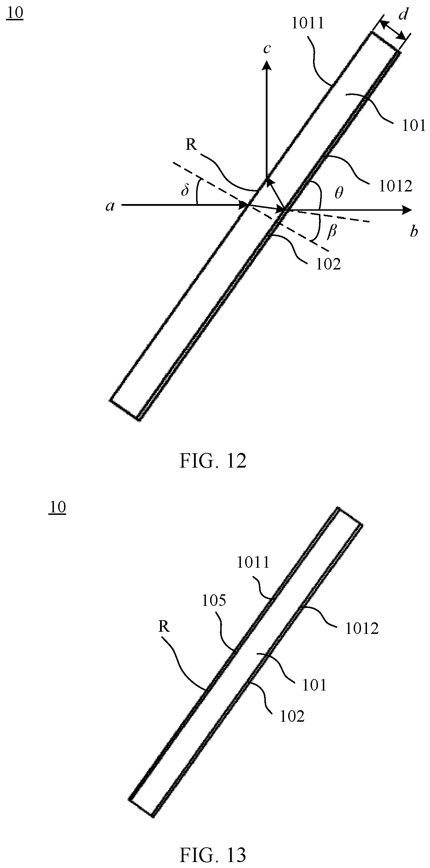

FIG. 12 is a schematic diagram of a structure of a beam splitter plate 10 according to some other examples of this application. As shown in FIG. 12, the beam splitter plate 10 includes a transmissive plate 101 and a beam splitter film 102. A material of the transmissive plate 101 includes but is not limited to optical glass. The transmissive plate 101 has a first surface 1011 and a second surface 1012 opposite to each other, and the first surface 1011 and the second surface 1012 are perpendicular to a thickness direction of the transmissive plate 101. The beam splitter film 102 is attached to the second surface 1012. The structure is simple and is easy to implement.

When the beam splitter plate 10 described in the foregoing example is mounted in the imaging beam path, and the imaging beam a is incident from the first surface 1011 (that is, a light receiving surface R of the beam splitter plate 10), as shown in FIG. 12, the imaging beam *a* is incident into the beam splitter plate 10 from the light receiving surface R. The beam splitter film 102 reflects one (for example, near-infrared light *c*) of the near-infrared light and the visible light in the imaging beam, and transmits the other (for example, visible light *b*) of the near-infrared light and the visible light. The near-infrared light c passes through the transmissive plate 101 twice, and a transmission path length of the near-infrared light c in the beam splitter plate 10 is *L*₂= 2 × *d*/cos *β* . The visible light *b* passes through the beam splitter plate 10 once, and a transmission path length of the visible light *b* in the beam splitter plate 10 is *L*₁*= d*/cos *β* . According to a light refraction law, *n=*sin *δ*/sin *β* . δ=90°-*θ* can be learned from FIG. 9. *L*₁*= d* × *n*/sin *θ* and *2*×*d*×*n*/sin *θ* can be deduced from that. *n* is a refractive index of the material of the transmissive plate 101. Because the thickness *d* of the transmissive plate 101 satisfies that the transmission path lengths of the visible light and the near-infrared light in the imaging beam a are both less than the projection length of the beam splitter film 102 on the optical axis of the imaging beam a, and the projection length of the beam splitter film 102 on the optical axis of the imaging beam a is *L* × cos *θ* , *L*₁*= d* ×*n*/sin*θ < L* × cos *θ* , and *L*₂= 2 × *d* × *n*/sin *θ < L* × cos *θ* , from which *d< L* sin *θ* cos *θ*/2*n* can be deduced. Therefore, in the embodiment shown in FIG. 12, the thickness *d* of the transmissive plate 101 satisfies that the transmission path lengths of the visible light and the near-infrared light in the imaging beam a are both less than the projection length of the beam splitter film 102 on the optical axis of the imaging beam a, that is, the thickness *d* of the transmissive plate 101 satisfies *d< L* sin *θ* cos *θ*/ *2n.*

To increase transmittances of visible light and near-infrared light at the first surface 1011 of the transmissive plate 101, in some embodiments, as shown in FIG. 13, the beam splitter plate 10 further includes a third antireflective film 105. The third antireflective film 105 is attached to the first surface 1011. The third antireflective film 105 is configured to increase transmittances of visible light and near-infrared light that are incident into the transmissive plate 101 from the first surface 1011, and the visible light and the near-infrared light in the imaging beam pass through the third antireflective film 105.

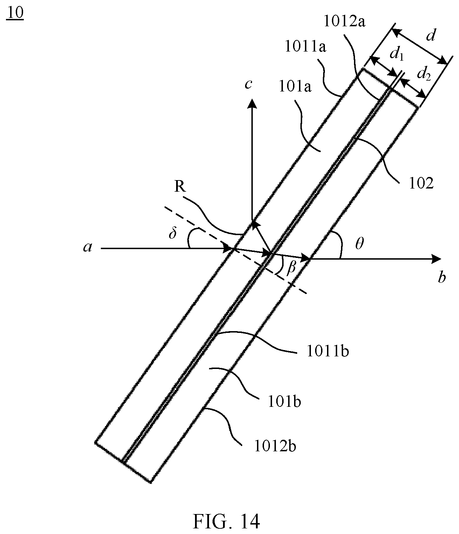

FIG. 14 is a schematic diagram of a structure of a beam splitter plate 10 according to some other embodiments of this application. As shown in FIG. 14, the beam splitter plate 10 includes a first transmissive plate 101a, a second transmissive plate 101b, and a beam splitter film 102. Materials of the first transmissive plate 101a and the second transmissive plate 101b include but are not limited to optical glass. The first transmissive plate 101a has a first surface 1011a and a second surface 1012a opposite to each other, and the first surface 1011a and the second surface 1012a are perpendicular to a thickness direction of the first transmissive plate 101a. The second transmissive plate 101b has a first surface 1011b and a second surface 1012b opposite to each other, and the first surface 1011b and the second surface 1012b are perpendicular to a thickness direction of the second transmissive plate 101b. The beam splitter film 102 is sandwiched between the second surface 1012a and the first surface 1011b. The beam splitter film 102 is configured to reflect visible light and transmit near-infrared light, or the beam splitter film 102 is configured to reflect near-infrared light and transmit visible light. The structure is simple and easy to implement, and can perform waterproof and dustproof protection on the beam splitter film.

When the beam splitter plate 10 described in the foregoing embodiment is mounted in the imaging beam path, and the imaging beam a is incident from the first surface 1011a (that is, a light receiving surface R of the beam splitter plate 10), as shown in FIG. 14, the imaging beam *a* is incident into the beam splitter plate 10 from the light receiving surface R. The beam splitter film 102 reflects one (for example, near-infrared light *c*) of the near-infrared light and the visible light in the imaging beam, and transmits the other (for example, visible light *b*) of the near-infrared light and the visible light. The near-infrared light c passes through the first transmissive plate 101a twice, and a transmission path length of the near-infrared light c in the beam splitter plate 10 is *L*₂= 2 × *d*₁ /cos *β* . The visible light b passes through the first transmissive plate 101a and the second transmissive plate 101b, and a transmission path length of the visible light *b* in the beam splitter plate 10 is *L*₁*=* (*d*₁ *+d*₂ ) / cos *β* = *d*/cos *β .* According to a light refraction law, *n=*sin *δ*/sin *β* . δ=90°-*θ* can be learned from FIG. 9. *L*₁*=d* × *n*/sin *θ* and *L₂=* 2 × *d*₁ × *n*/sin *θ* can be deduced from that. *n* is a refractive index of the material of the transmissive plate 101. *d*₁ is a thickness of the first transmissive plate 101a. *d₂* is a thickness of the second transmissive plate 101b. Because the thickness *d* of the transmissive plate 101 satisfies that the transmission path lengths of the visible light and the near-infrared light in the imaging beam a are both less than the projection length of the beam splitter film 102 on the optical axis of the imaging beam a, and the projection length of the beam splitter film 102 on the optical axis of the imaging beam a is *L* × cos *θ* , *L*₁*= d* × *n*/sin *θ < L* × cos *θ* , and *L*₂= 2 × *d*₁ ×*n*/sin*θ* < *L* × cos *θ* , from which *d< L* sin *θ* cos *θ*/*n* and *d*₁≤*d*₂ can be deduced. Therefore, in the embodiment shown in FIG. 14, the thickness *d* of the transmissive plate 101 satisfies that the transmission path lengths of the visible light and the near-infrared light in the imaging beam a are both less than the projection length of the beam splitter film 102 on the optical axis of the imaging beam a, that is, the thickness *d* of the transmissive plate 101 satisfies *d< L* sin *θ* cos *θ*/*n* and *d*₁*≤d*₂.

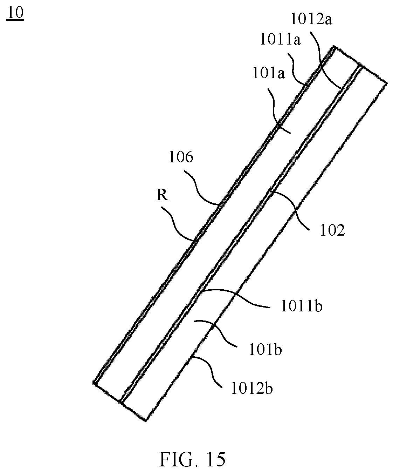

To increase transmittances of visible light and near-infrared light at the first surface 1011a of the first transmissive plate 101a, in some embodiments, as shown in FIG. 15, the beam splitter plate 10 further includes a fourth antireflective film 106. The fourth antireflective film 106 is attached to the first surface 1011a of the first transmissive plate 101a. The fourth antireflective film 106 is configured to increase transmittances of visible light and near-infrared light that are incident into the first transmissive plate 101a from the first surface 1011a of the first transmissive plate 101a, and the visible light and the near-infrared light in the imaging beam pass through the fourth antireflective film 106.

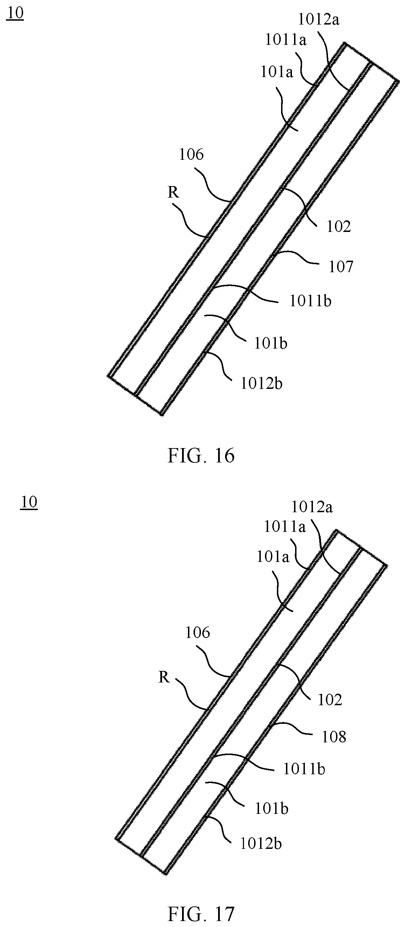

When the beam splitter film 102 is configured to reflect near-infrared light and transmit visible light, to increase a transmittance of the visible light at the second surface 1012b of the second transmissive plate 101b, in some embodiments, as shown in FIG. 16, the beam splitter plate 10 further includes a fifth antireflective film 107. The fifth antireflective film 107 is attached to the second surface 1012b of the second transmissive plate 101b. The fifth antireflective film 107 is configured to increase a transmittance of visible light emergent out of the second transmissive plate 101b from the second surface 1012b of the second transmissive plate 101b, and the transmitted visible light passes through the fifth antireflective film 107.

When the beam splitter film 102 is configured to reflect visible light and transmit near-infrared light, to increase a transmittance of the near-infrared light at the second surface 1012b of the second transmissive plate 101b, in some embodiments, as shown in FIG. 17, the beam splitter plate 10 further includes a sixth antireflective film 108. The sixth antireflective film 108 is attached to the second surface 1012b of the second transmissive plate 101b. The sixth antireflective film 108 is configured to increase a transmittance of near-infrared light emergent out of the second transmissive plate 101b from the second surface 1012b of the second transmissive plate 101b, and the transmitted near-infrared light passes through the sixth antireflective film 108.

In some embodiments, the thickness *d* of the transmissive plate 101 is less than 0.5 mm. In this way, the thickness of the transmissive plate 101 is relatively small, and when the beam splitter plate 10 is disposed obliquely in the transmission path of the imaging beam of the camera, the transmission path lengths of the visible light b and the near-infrared light c in the imaging beam *a* in the transmissive plate 101 are relatively small, which causes a relatively small chromatic aberration and off-axis aberration, and reduces difficulty in correcting a chromatic aberration and an off-axis aberration of the camera.

In some embodiments, the inclination angle *θ* of the beam splitter plate 10 is 40° to 60°. When the inclination angle of the beam splitter plate 10 is within this range, visible light and near-infrared light can be separated.

In some embodiments, as shown in FIG. 8, the beam splitter apparatus 12 further includes a visible light sensor 123 and a near-infrared light sensor 124. The visible light sensor 123 is disposed in the housing 121, and the visible light sensor 123 is configured to convert the visible light b reflected or transmitted by the beam splitter plate 10 into a visible light signal. The near-infrared light sensor 124 is disposed in the housing 121, and the near-infrared light sensor 124 is configured to convert the near-infrared light c transmitted or reflected by the beam splitter plate 10 into a luminance signal.

In this way, the beam splitter plate 10, the visible light sensor 123, and the near-infrared light sensor 124 are integrated in the same housing, so that accuracy of optical paths from the beam splitter plate 10 to the visible light sensor 123 and from the beam splitter plate 10 to the near-infrared light sensor 124 can be ensured.

In some embodiments, the beam splitter apparatus 12 further includes a visible light filter (not shown in the figure), the visible light filter is disposed between the beam splitter plate 10 and the near-infrared light sensor 124, and the visible light filter is configured to filter out visible light in the near-infrared light reflected or transmitted by the beam splitter plate 10. In this way, the visible light and the near-infrared light can be further separated, to avoid interference from the visible light to sensing and collection of the near-infrared light.

In some embodiments, the beam splitter apparatus 12 further includes a near-infrared light filter (not shown in the figure), the near-infrared light filter is disposed between the beam splitter plate 10 and the visible light sensor 123, and the near-infrared light filter is configured to filter out near-infrared light in the visible light reflected or transmitted by the beam splitter plate 10. In this way, the near-infrared light and the visible light can be further separated, to avoid interference from the near-infrared light to sensing and collection of the visible light.

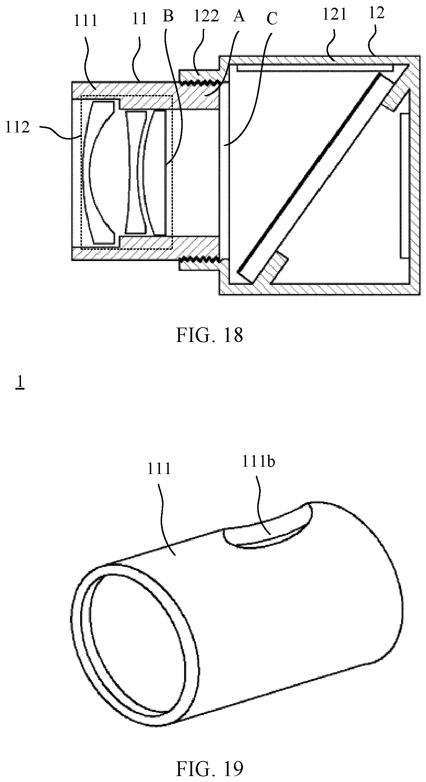

FIG. 18 is a cutaway drawing of the beam splitter lens module shown in FIG. 6. As shown in FIG. 18, the housing 121 of the beam splitter apparatus 12 is connected to the image side end A of the lens barrel 111 of the imaging lens module 11 by using the connecting structure 122, and the light inlet C of the beam splitter apparatus 12 is opposite to the image side surface B of the imaging lens group 112 of the imaging lens module 11. In this way, the beam splitter lens module is assembled, and the beam splitter apparatus can be assembled with different imaging lens modules to form beam splitter lens modules having different functions, which makes it unnecessary to develop a new beam splitter lens module, thereby saving development costs of the beam splitter lens module.

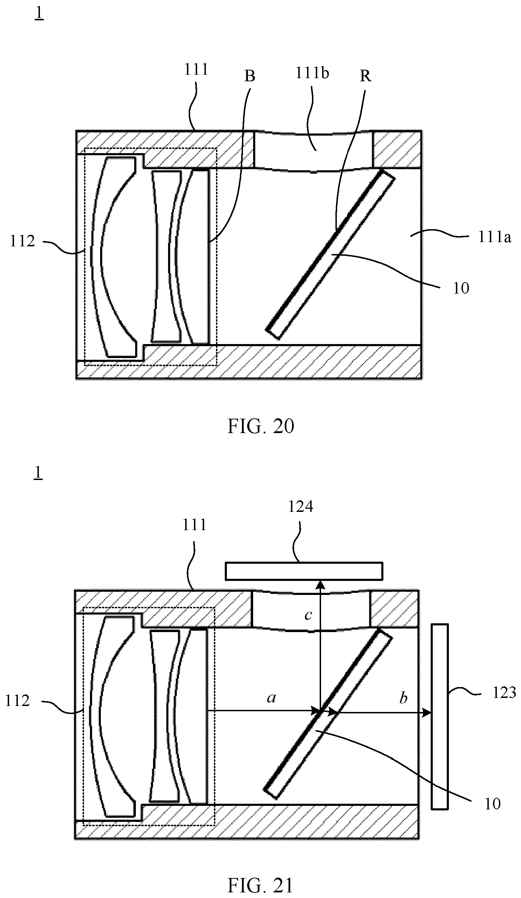

FIG. 19 is a schematic diagram of a structure of a beam splitter lens module 1 according to some other embodiments of this application. FIG. 20 is a cutaway drawing of the beam splitter lens module shown in FIG. 19. As shown in FIG. 19 and FIG. 20, the beam splitter lens module 1 includes a lens barrel 111, an imaging lens group 112, and a beam splitter plate 10. The lens barrel 111 is configured to fix the imaging lens group 112 and the beam splitter plate 10. A material of the lens barrel 111 includes but is not limited to metal and plastic. The imaging lens group 112 is disposed in the lens barrel 111, the imaging lens group 112 includes at least one lens, and the imaging lens group 112 is configured to focus to form an imaging beam. The beam splitter plate 10 is the same as the beam splitter plate 10 in the beam splitter apparatus 12, the beam splitter plate 10 is disposed obliquely in the lens barrel 111, the beam splitter plate 10 is located on an image side of the imaging lens group 112, and a light receiving surface R of the beam splitter plate 10 faces an image side surface B of the imaging lens group.

In this way, the imaging lens group 112 and the beam splitter plate 10 are integrated into the lens barrel 111, so that relative position accuracy between the imaging lens group 112 and the beam splitter plate 10 can be ensured, and accuracy of an optical path from the imaging lens group 112 to the beam splitter plate 10 can be ensured.

In some embodiments, as shown in FIG. 19 and FIG. 20, a first opening 111a is enclosed by an image side end of the lens barrel 111, and visible light or near-infrared light transmitted by the beam splitter plate 10 can be emergent from the first opening 111a. A second opening 111b is provided on a side wall of the lens barrel 111, and near-infrared light or visible light reflected by the beam splitter plate 10 can be emergent from the second opening 111b.

In some embodiments, as shown in FIG. 21, the beam splitter lens module 1 further includes a visible light sensor 123 and a near-infrared light sensor 124. The visible light sensor 123 is disposed outside the lens barrel 111 and fixed to the lens barrel 111, and the visible light sensor 123 is configured to convert the visible light b reflected or transmitted by the beam splitter plate 10 into a visible light signal. The near-infrared light sensor 124 is disposed outside the lens barrel 111 and fixed to the lens barrel 111, and the near-infrared light sensor 124 is configured to convert the near-infrared light c transmitted or reflected by the beam splitter plate 10 into a luminance signal.

In this way, the beam splitter plate 10, the visible light sensor 123, and the near-infrared light sensor 124 are fixed together, so that accuracy of optical paths from the beam splitter plate 10 to the visible light sensor 123 and from the beam splitter plate 10 to the near-infrared light sensor 124 can be ensured.

In some embodiments, the beam splitter lens module 1 further includes a visible light filter (not shown in the figure), the visible light filter is disposed between the beam splitter plate 10 and the near-infrared light sensor 124, and the visible light filter is configured to filter out visible light in the near-infrared light reflected or transmitted by the beam splitter plate 10. In this way, the visible light and the near-infrared light can be further separated, to avoid interference from the visible light to sensing and collection of the near-infrared light.

In some embodiments, the beam splitter lens module 1 further includes a near-infrared light filter (not shown in the figure), the near-infrared light filter is disposed between the beam splitter plate 10 and the visible light sensor 123, and the near-infrared light filter is configured to filter out near-infrared light in the visible light reflected or transmitted by the beam splitter plate 10. In this way, the near-infrared light and the visible light can be further separated, to avoid interference from the near-infrared light to sensing and collection of the visible light.

As shown in FIG. 5, the camera further includes a camera host 2, and the camera host 2 includes an image fusion module (not shown in the figure). The image fusion module is electrically connected to the visible light sensor 123, and the image fusion module is electrically connected to the near-infrared light sensor 124. The image fusion module is configured to perform separate image processing on the visible light signal converted by the visible light sensor 123 and the luminance signal converted by the near-infrared light sensor 124, and fuse a processed visible light signal and a processed luminance signal.

In the descriptions of this specification, the described specific features, structures, materials, or characteristics may be combined in an appropriate manner in any one or more of the embodiments or examples.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the appended claims.

## Claims

1. A beam splitter apparatus (12), comprising:
a housing (121), provided with a light inlet (C);
a connecting structure (122), disposed on a housing edge at the light inlet (C), wherein the connecting structure (122) is configured to connect to an image side end of a lens barrel (111) of an imaging lens module (11), so that the light inlet (C) is opposite to an image side surface (B) of an imaging lens group (112) of the imaging lens module (11); and
a beam splitter plate (10), disposed obliquely in the housing (121) and in a transmission path of an imaging beam of a camera, comprising:
a transmissive plate (101) that is a light-transmitting plate-like structure; and
a beam splitter film (102), supported on the transmissive plate (101) and parallel to the transmissive plate (101), wherein the beam splitter film (102) is configured to reflect visible light and transmit near-infrared light, or the beam splitter film (102) is configured to reflect near-infrared light and transmit visible light, wherein
a thickness of the transmissive plate (101) satisfies that when the beam splitter plate (101) is disposed obliquely in the transmission path of the imaging beam of the camera, transmission path lengths of visible light and near-infrared light in the imaging beam in the transmissive plate are both less than a projection length of the beam splitter film on an optical axis of the imaging beam,
wherein the transmissive plate (101) has a first surface (1011) and a second surface (1012) opposite to each other; and
the beam splitter film (102) is attached to the second surface (1012), and
wherein the beam splitter plate (101) further comprises:
a third antireflective film (105), attached to the first surface (1011), wherein the third antireflective film (105) is configured to increase transmittances of visible light and near-infrared light that are incident into the transmissive plate (101) from the first surface (1011).

2. The beam splitter apparatus according to claim 1, wherein the transmissive plate comprises a first transmissive plate (101a) and a second transmissive plate (101b);
the first transmissive plate (101a) has a first surface (1011a) and a second surface (1012a) opposite to each other;
the second transmissive plate (101b) has a first surface (1011b) and a second surface (1012b) opposite to each other; and
the beam splitter film is sandwiched between the second surface (1012a) of the first transmissive plate (101a) and the first surface (1011b) of the second transmissive plate (101b).

3. The beam splitter apparatus according to claim 2, wherein the beam splitter plate further comprises:
a fourth antireflective film (106), attached to the first surface of the first transmissive plate, wherein the fourth antireflective film (106) is configured to increase transmittances of visible light and near-infrared light that are incident into the first transmissive plate from the first surface of the first transmissive plate.

4. The beam splitter apparatus according to claim 2 or 3, wherein when the beam splitter film reflects near-infrared light and transmits visible light, the beam splitter plate further comprises:
a fifth antireflective film (107), attached to the second surface of the second transmissive plate, wherein the fifth antireflective film (107) is configured to increase a transmittance of visible light emergent out of the second transmissive plate from the second surface of the second transmissive plate; and
when the beam splitter film reflects visible light and transmits near-infrared light, the beam splitter plate further comprises:
a sixth antireflective film (108), attached to the second surface of the second transmissive plate, wherein the sixth antireflective film (108) is configured to increase a transmittance of near-infrared light emergent out of the second transmissive plate from the second surface of the second transmissive plate.

5. The beam splitter apparatus according to claim 1, further comprising:
a visible light sensor (123), disposed in the housing, wherein the visible light sensor (123) is configured to convert visible light reflected or transmitted by the beam splitter plate into a visible light signal; and
a near-infrared light sensor (124), disposed in the housing, wherein the near-infrared light sensor (124) is configured to convert near-infrared light transmitted or reflected by the beam splitter plate into a luminance signal.

6. A beam splitter lens module (1), comprising:
an imaging lens module (11), comprising a lens barrel (111) and an imaging lens group (112) disposed in the lens barrel (111), wherein the lens barrel (111) has an image side end, the imaging lens group (112) is configured to focus to form an imaging beam, and the imaging lens group (112) has an image side surface; and
a beam splitter apparatus (12) that is the beam splitter apparatus according to any of claims 1-5, wherein a housing (121) of the beam splitter apparatus (12) is connected to the image side end of the lens barrel (111) by using a connecting structure, and a light inlet of the beam splitter apparatus (12) is opposite to the image side surface of the imaging lens group (112).

7. A beam splitter lens module (1), comprising:
a lens barrel (111);
an imaging lens group (112), disposed in the lens barrel (111), wherein the imaging lens group (112) is configured to focus to form an imaging beam; and
a beam splitter plate (10), wherein the beam splitter plate (10) is located on an image side of the imaging lens group (112), and the beam splitter plate (10) is disposed obliquely in the lens barrel (111) and in a transmission path of an imaging beam of a camera,
wherein the beam splitter plate (10) comprises:
a transmissive plate (101) that is a light-transmitting plate-like structure; and
a beam splitter film (102), supported on the transmissive plate (101) and parallel to the transmissive plate (101), wherein the beam splitter film (102) is configured to reflect visible light and transmit near-infrared light, or the beam splitter film (102) is configured to reflect near-infrared light and transmit visible light, wherein
a thickness of the transmissive plate (101) satisfies that when the beam splitter plate (101) is disposed obliquely in the transmission path of the imaging beam of the camera, transmission path lengths of visible light and near-infrared light in the imaging beam in the transmissive plate are both less than a projection length of the beam splitter film on an optical axis of the imaging beam,
wherein the transmissive plate (101) has a first surface (1011) and a second surface (1012) opposite to each other; and
the beam splitter film (102) is attached to the second surface (1012), and
wherein the beam splitter plate (101) further comprises:
a third antireflective film (105), attached to the first surface (1011), wherein the third antireflective film (105) is configured to increase transmittances of visible light and near-infrared light that are incident into the transmissive plate (101) from the first surface (1011).

8. The beam splitter lens module according to claim 7, wherein a first opening (111a) is enclosed by an image side end of the lens barrel, and visible light or near-infrared light transmitted by the beam splitter plate is emergent from the first opening (111a); and a second opening (111b) is provided on a side wall of the lens barrel, and near-infrared light or visible light reflected by the beam splitter plate is emergent from the second opening (111b); and
the beam splitter lens module further comprises:
a visible light sensor (123), disposed outside the lens barrel and fixed to the lens barrel, wherein the visible light sensor (123) is configured to convert the visible light reflected or transmitted by the beam splitter plate into a visible light signal; and
a near-infrared light sensor (124), disposed outside the lens barrel and fixed to the lens barrel, wherein the near-infrared light sensor (124) is configured to convert the near-infrared light transmitted or reflected by the beam splitter plate into a luminance signal.

9. A camera, comprising the beam splitter lens module (1) according to any one of claims 6 to 8.

10. An electronic device, comprising the camera according to claim 9.

## Patentansprüche

1. Strahlteilereinrichtung (12), die umfasst:
ein Gehäuse (121), das mit einem Lichteinlass (C) versehen ist;
eine Verbindungsstruktur (122), die an einer Gehäusekante an dem Lichteinlass (C) angeordnet ist, wobei die Verbindungsstruktur (122) konfiguriert ist, um mit einem bildseitigen Ende eines Linsentubus (111) eines Abbildungslinsenmoduls (11) verbunden zu werden, sodass der Lichteinlass (C) einer bildseitigen Oberfläche (B) einer Abbildungslinsengruppe (112) des Abbildungslinsenmoduls (11) gegenüberliegt; und
eine Strahlteilerplatte (10), die schräg in dem Gehäuse (121) und in einem Durchlasspfad eines Abbildungsstrahls einer Kamera angeordnet ist, die umfasst:
eine durchlässige Platte (101), die eine lichtdurchlässige plattenartige Struktur ist; und
eine Strahlteilerfolie (102), die auf der durchlässigen Platte (101) getragen wird und parallel zu der durchlässigen Platte (101) ist, wobei die Strahlteilerfolie (102) konfiguriert ist, um sichtbares Licht zu reflektieren und Nahinfrarotlicht durchzulassen, oder die Strahlteilerfolie (102) konfiguriert ist, um Nahinfrarotlicht zu reflektieren und sichtbares Licht durchzulassen, wobei
eine Dicke der durchlässigen Platte (101) genügt, dass, wenn die Strahlteilerplatte (101) schräg in dem Durchlasspfad des Abbildungsstrahls der Kamera angeordnet ist, Durchlasspfadlängen von sichtbarem Licht und Nahinfrarotlicht in dem Abbildungsstrahl in der durchlässigen Platte beide kürzer als eine Projektionslänge der Strahlteilerfolie auf einer optischen Achse des Abbildungsstrahls sind,
wobei die durchlässige Platte (101) eine erste Oberfläche (1011) und eine zweite Oberfläche (1012), die einander gegenüberliegen, aufweist; und
die Strahlteilerfolie (102) an der zweiten Oberfläche (1012) angebracht ist und wobei die Strahlteilerplatte (101) ferner umfasst:
eine dritte Antireflexfolie (105), die an der ersten Oberfläche (1011) angebracht ist, wobei die dritte Antireflexfolie (105) konfiguriert ist, um Durchlässigkeiten von sichtbarem Licht und Nahinfrarotlicht, die von der ersten Oberfläche (1011) in die durchlässige Platte (101) einfallen, zu erhöhen.

2. Strahlteilereinrichtung nach Anspruch 1, wobei die durchlässige Platte eine erste durchlässige Platte (101a) und eine zweite durchlässige Platte (101b) umfasst;
die erste durchlässige Platte (101a) eine erste Oberfläche (1011a) und eine zweite Oberfläche (1012a), die einander gegenüberliegen, aufweist;
die zweite durchlässige Platte (101b) eine erste Oberfläche (1011b) und eine zweite Oberfläche (1012b), die einander gegenüberliegen, aufweist; und
die Strahlteilerfolie zwischen der zweiten Oberfläche (1012a) der ersten durchlässigen Platte (101a) und der ersten Oberfläche (1011b) der zweiten durchlässigen Platte (101b) eingeschoben ist.

3. Strahlteilereinrichtung nach Anspruch 2, wobei die Strahlteilerplatte ferner umfasst: eine vierte Antireflexfolie (106), die an der ersten Oberfläche der ersten durchlässigen Platte angebracht ist, wobei die vierte Antireflexfolie (106) konfiguriert ist, um Durchlässigkeiten von sichtbarem Licht und Nahinfrarotlicht, die von der ersten Oberfläche der ersten durchlässigen Platte in die erste durchlässige Platte einfallen, zu erhöhen.

4. Strahlteilereinrichtung nach Anspruch 2 oder 3, wobei, wenn die Strahlteilerfolie Nahinfrarotlicht reflektiert und sichtbares Licht durchlässt, die Strahlteilerplatte ferner umfasst:
eine fünfte Antireflexfolie (107), die an der zweiten Oberfläche der zweiten durchlässigen Platte angebracht ist, wobei die fünfte Antireflexfolie (107) konfiguriert ist, um eine Durchlässigkeit von sichtbarem Licht, das aus der zweiten durchlässigen Platte von der zweiten Oberfläche der zweiten durchlässigen Platte austritt, zu erhöhen; und
wenn die Strahlteilerfolie sichtbares Licht reflektiert und Nahinfrarotlicht durchlässt, die Strahlteilerplatte ferner umfasst:
eine sechste Antireflexfolie (108), die an der zweiten Oberfläche der zweiten durchlässigen Platte angebracht ist, wobei die sechste Antireflexfolie (108) konfiguriert ist, um eine Durchlässigkeit von Nahinfrarotlicht, das aus der zweiten durchlässigen Platte von der zweiten Oberfläche der zweiten durchlässigen Platte austritt, zu erhöhen.

5. Strahlteilereinrichtung nach Anspruch 1, die ferner umfasst:
einen Sensor (123) für sichtbares Licht, der in dem Gehäuse angeordnet ist, wobei der Sensor (123) für sichtbares Licht konfiguriert ist, um sichtbares Licht, das durch die Strahlteilerplatte reflektiert oder durchgelassen wird, in ein sichtbares Lichtsignal umzuwandeln; und
einen Nahinfrarotlichtsensor (124), der in dem Gehäuse angeordnet ist, wobei der Nahinfrarotlichtsensor (124) konfiguriert ist, um Nahinfrarotlicht, das durch die Strahlteilerplatte durchgelassen oder reflektiert wird, in ein Luminanzsignal umzuwandeln.

6. Strahlteilerlinsenmodul (1), das umfasst:
ein Abbildungslinsenmodul (11), das einen Linsentubus (111) und eine Abbildungslinsengruppe (112), die in dem Linsentubus (111) angeordnet ist, umfasst, wobei der Linsentubus (111) ein bildseitiges Ende aufweist, die Abbildungslinsengruppe (112) konfiguriert ist, um zu fokussieren, um einen Abbildungsstrahl auszubilden, und die Abbildungslinsengruppe (112) eine bildseitige Oberfläche aufweist; und
eine Strahlteilereinrichtung (12), die die Strahlteilereinrichtung nach einem der Ansprüche 1 bis 5 ist, wobei ein Gehäuse (121) der Strahlteilereinrichtung (12) durch Verwenden einer Verbindungsstruktur mit dem bildseitigen Ende des Linsentubus (111) verbunden ist und ein Lichteinlass der Strahlteilereinrichtung (12) der bildseitigen Oberfläche der Abbildungslinsengruppe (112) gegenüberliegt.

7. Strahlteilerlinsenmodul (1), das umfasst:
einen Linsentubus (111);
eine Abbildungslinsengruppe (112), die in dem Linsentubus (111) angeordnet ist, wobei die Abbildungslinsengruppe (112) konfiguriert ist, um zu fokussieren, um einen Abbildungsstrahl auszubilden; und
eine Strahlteilerplatte (10), wobei sich die Strahlteilerplatte (10) auf einer Bildseite der Abbildungslinsengruppe (112) befindet und die Strahlteilerplatte (10) schräg in dem Linsentubus (111) und in einem Durchlasspfad eines Abbildungsstrahls einer Kamera angeordnet ist,
wobei die Strahlteilerplatte (10) umfasst:
eine durchlässige Platte (101), die eine lichtdurchlässige plattenartige Struktur ist; und
eine Strahlteilerfolie (102), die auf der durchlässigen Platte (101) getragen wird und parallel zu der durchlässigen Platte (101) ist, wobei die Strahlteilerfolie (102) konfiguriert ist, um sichtbares Licht zu reflektieren und Nahinfrarotlicht durchzulassen, oder die Strahlteilerfolie (102) konfiguriert ist, um Nahinfrarotlicht zu reflektieren und sichtbares Licht durchzulassen, wobei
eine Dicke der durchlässigen Platte (101) genügt, dass, wenn die Strahlteilerplatte (101) schräg in dem Durchlasspfad des Abbildungsstrahls der Kamera angeordnet ist, Durchlasspfadlängen von sichtbarem Licht und Nahinfrarotlicht in dem Abbildungsstrahl in der durchlässigen Platte beide kürzer als eine Projektionslänge der Strahlteilerfolie auf einer optischen Achse des Abbildungsstrahls sind,
wobei die durchlässige Platte (101) eine erste Oberfläche (1011) und eine zweite Oberfläche (1012), die einander gegenüberliegen, aufweist; und
die Strahlteilerfolie (102) an der zweiten Oberfläche (1012) angebracht ist und wobei die Strahlteilerplatte (101) ferner umfasst:
eine dritte Antireflexfolie (105), die an der ersten Oberfläche (1011) angebracht ist, wobei die dritte Antireflexfolie (105) konfiguriert ist, um Durchlässigkeiten von sichtbarem Licht und Nahinfrarotlicht zu erhöhen, die von der ersten Oberfläche (1011) in die durchlässige Platte (101) einfallen.

8. Strahlteilerlinsenmodul nach Anspruch 7, wobei eine erste Öffnung (111a) von einem bildseitigen Ende des Linsentubus umgeben ist und sichtbares Licht oder Nahinfrarotlicht, das durch die Strahlteilerplatte durchgelassen wird, von der ersten Öffnung (111a) austritt; und eine zweite Öffnung (111b) an einer Seitenwand des Linsentubus bereitgestellt ist und Nahinfrarotlicht oder sichtbares Licht, das durch die Strahlteilerplatte reflektiert wird, von der zweiten Öffnung (111b) austritt; und
das Strahlteilerlinsenmodul ferner umfasst:
einen Sensor (123) für sichtbares Licht, der außerhalb des Linsentubus angeordnet und an dem Linsentubus befestigt ist, wobei der Sensor (123) für sichtbares Licht konfiguriert ist, um das sichtbare Licht, das durch die Strahlteilerplatte reflektiert oder durchgelassen wird, in ein sichtbares Lichtsignal umzuwandeln; und
einen Nahinfrarotlichtsensor (124), der außerhalb des Linsentubus angeordnet und an dem Linsentubus befestigt ist, wobei der Nahinfrarotlichtsensor (124) konfiguriert ist, um das Nahinfrarotlicht, das durch die Strahlteilerplatte durchgelassen oder reflektiert wird, in ein Luminanzsignal umzuwandeln.

9. Kamera, die das Strahlteilerlinsenmodul (1) nach einem der Ansprüche 6 bis 8 umfasst.

10. Elektronische Vorrichtung, die die Kamera nach Anspruch 9 umfasst.

## Revendications

1. Appareil séparateur de faisceau (12), comprenant :
un boîtier (121), pourvu d'une entrée de lumière (C) ;
une structure de liaison (122), disposée sur un bord de boîtier au niveau de l'entrée de lumière (C), dans lequel la structure de liaison (122) est conçue pour être reliée à une extrémité côté image d'un barillet d'objectif (111) d'un module d'objectif d'imagerie (11), de sorte que l'entrée de lumière (C) se situe à l'opposé d'une surface côté image (B) d'un groupe d'objectifs d'imagerie (112) du module d'objectif d'imagerie (11) ; et
une plaque séparatrice de faisceau (10), disposée de manière oblique dans le boîtier (121) et dans un chemin de transmission d'un faisceau d'imagerie d'une caméra, comprenant :
une plaque transmissive (101) qui est une structure de type plaque transmettant de la lumière ; et
un film séparateur de faisceau (102), supporté par la plaque transmissive (101) et parallèle à la plaque transmissive (101), dans lequel le film séparateur de faisceau (102) est configuré pour réfléchir de la lumière visible et transmettre de la lumière proche infrarouge, ou le film séparateur de faisceau (102) est configuré pour réfléchir de la lumière proche infrarouge et transmettre de la lumière visible, dans lequel une épaisseur de la plaque transmissive (101) est telle que lorsque la plaque séparatrice de faisceau (101) est disposée de manière oblique dans le chemin de transmission du faisceau d'imagerie de la caméra, des longueurs de chemin de transmission de lumière visible et de lumière proche infrarouge dans le faisceau d'imagerie dans la plaque transmissive sont toutes deux inférieures à une longueur de projection du film séparateur de faisceau sur un axe optique du faisceau d'imagerie,
dans lequel la plaque transmissive (101) a une première surface (1011) et une seconde surface (1012) opposées l'une à l'autre ; et
le film séparateur de faisceau (102) est attaché à la seconde surface (1012), et
dans lequel la plaque séparatrice de faisceau (101) comprend en outre :
un troisième film antireflet (105), attaché à la première surface (1011), dans lequel le troisième film antireflet (105) est configuré pour augmenter des transmittances de lumière visible et de lumière proche infrarouge qui sont incidentes sur la plaque transmissive (101) à partir de la première surface (1011).

2. Appareil séparateur de faisceau selon la revendication 1, dans lequel la plaque transmissive comprend une première plaque transmissive (101a) et une seconde plaque transmissive (101b) ;
la première plaque transmissive (101a) a une première surface (1011a) et une seconde surface (1012a) opposées l'une à l'autre ;
la seconde plaque transmissive (101b) a une première surface (1011b) et une seconde surface (1012b) opposées l'une à l'autre ; et
le film séparateur de faisceau est pris en sandwich entre la seconde surface (1012a) de la première plaque transmissive (101a) et la première surface (1011b) de la seconde plaque transmissive (101b).

3. Appareil séparateur de faisceau selon la revendication 2, dans lequel la plaque séparatrice de faisceau comprend en outre :
un quatrième film antireflet (106), attaché à la première surface de la première plaque transmissive, dans lequel le quatrième film antireflet (106) est configuré pour augmenter des transmittances de lumière visible et de lumière proche infrarouge qui sont incidentes sur la première plaque transmissive à partir de la première surface de la première plaque transmissive.

4. Appareil séparateur de faisceau selon la revendication 2 ou 3, dans lequel, lorsque le film séparateur de faisceau réfléchit de la lumière proche infrarouge et transmet de la lumière visible, la plaque séparatrice de faisceau comprend en outre :
un cinquième film antireflet (107), attaché à la seconde surface de la seconde plaque transmissive, dans lequel le cinquième film antireflet (107) est configuré pour augmenter une transmittance de lumière visible émergeant de la seconde plaque transmissive à partir de la seconde surface de la seconde plaque transmissive ; et
lorsque le film séparateur de faisceau réfléchit de la lumière visible et transmet de la lumière proche infrarouge, la plaque séparatrice de faisceau comprend en outre :
un sixième film antireflet (108), attaché à la seconde surface de la seconde plaque transmissive, dans lequel le sixième film antireflet (108) est configuré pour augmenter une transmittance de lumière proche infrarouge émergeant de la seconde plaque transmissive à partir de la seconde surface de la seconde plaque transmissive.

5. Appareil séparateur de faisceau selon la revendication 1, comprenant en outre :
un capteur de lumière visible (123), disposé dans le boîtier, dans lequel le capteur de lumière visible (123) est configuré pour convertir de la lumière visible réfléchie ou transmise par la plaque séparatrice de faisceau en un signal de lumière visible ; et
un capteur de lumière proche infrarouge (124), disposé dans le boîtier, dans lequel le capteur de lumière proche infrarouge (124) est configuré pour convertir de la lumière proche infrarouge transmise ou réfléchie par la plaque séparatrice de faisceau en un signal de luminance.

6. Module d'objectif séparateur de faisceau (1), comprenant :
un module d'objectif d'imagerie (11), comprenant un barillet d'objectif (111) et un groupe d'objectifs d'imagerie (112) disposé dans le barillet de l'objectif (111), dans lequel le barillet de l'objectif (111) a une extrémité côté image, le groupe d'objectifs d'imagerie (112) est configuré pour se mettre au point afin de former un faisceau d'imagerie, et le groupe d'objectifs d'imagerie (112) a une surface côté image ; et
un appareil séparateur de faisceau (12) qui est l'appareil séparateur de faisceau selon l'une quelconque des revendications 1 à 5, dans lequel un boîtier (121) de l'appareil séparateur de faisceau (12) est relié à l'extrémité côté image du barillet de l'objectif (111) en utilisant une structure de liaison, et une entrée de lumière de l'appareil séparateur de faisceau (12) se situe à l'opposé de la surface côté image du groupe d'objectifs d'imagerie (112).

7. Module d'objectif séparateur de faisceau (1), comprenant :
un barillet d'objectif (111) ;
un groupe d'objectifs d'imagerie (112), disposé dans le barillet de l'objectif (111), dans lequel le groupe d'objectifs d'imagerie (112) est configuré pour se mettre au point afin de former un faisceau d'imagerie ; et
une plaque séparatrice de faisceau (10), dans lequel la plaque séparatrice de faisceau (10) est située sur un côté image du groupe d'objectifs d'imagerie (112), et la plaque séparatrice de faisceau (10) est disposée de manière oblique dans le barillet de l'objectif (111) et dans un chemin de transmission d'un faisceau d'imagerie d'une caméra, dans lequel la plaque séparatrice de faisceau (10) comprend :
une plaque transmissive (101) qui est une structure de type plaque transmettant de la lumière ; et
un film séparateur de faisceau (102), supporté par la plaque transmissive (101) et parallèle à la plaque transmissive (101), dans lequel le film séparateur de faisceau (102) est configuré pour réfléchir de la lumière visible et transmettre de la lumière proche infrarouge, ou le film séparateur de faisceau (102) est configuré pour réfléchir de la lumière proche infrarouge et transmettre de la lumière visible, dans lequel
une épaisseur de la plaque transmissive (101) est telle que lorsque la plaque séparatrice de faisceau (101) est disposée de manière oblique dans le chemin de transmission du faisceau d'imagerie de la caméra, des longueurs de chemin de transmission de lumière visible et de lumière proche infrarouge dans le faisceau d'imagerie dans la plaque transmissive sont toutes deux inférieures à une longueur de projection du film séparateur de faisceau sur un axe optique du faisceau d'imagerie,
dans lequel la plaque transmissive (101) a une première surface (1011) et une seconde surface (1012) opposées l'une à l'autre ; et
le film séparateur de faisceau (102) est attaché à la seconde surface (1012), et
dans lequel la plaque séparatrice de faisceau (101) comprend en outre :
un troisième film antireflet (105), attaché à la première surface (1011), dans lequel le troisième film antireflet (105) est configuré pour augmenter des transmittances de lumière visible et de lumière proche infrarouge qui sont incidentes sur la plaque transmissive (101) à partir de la première surface (1011).

8. Module d'objectif séparateur de faisceau selon la revendication 7, dans lequel une première ouverture (111a) est entourée par une extrémité côté image du barillet de l'objectif, et de la lumière visible ou de la lumière proche infrarouge transmise par la plaque séparatrice de faisceau émerge de la première ouverture (111a) ; et une seconde ouverture (111b) est prévue sur une paroi latérale du barillet de l'objectif, et de la lumière proche infrarouge ou de la lumière visible réfléchie par la plaque séparatrice de faisceau émerge de la seconde ouverture (111b) ; et
le module d'objectif séparateur de faisceau comprend en outre :
un capteur de lumière visible (123), disposé à l'extérieur du barillet de l'objectif et fixé au barillet de l'objectif, dans lequel le capteur de lumière visible (123) est configuré pour convertir de la lumière visible réfléchie ou transmise par la plaque séparatrice de faisceau en un signal de lumière visible ; et
un capteur de lumière proche infrarouge (124), disposé à l'extérieur du barillet de l'objectif et fixé au barillet de l'objectif, dans lequel le capteur de lumière proche infrarouge (124) est configuré pour convertir de la lumière proche infrarouge transmise ou réfléchie par la plaque séparatrice de faisceau en un signal de luminance.

9. Caméra, comprenant le module d'objectif séparateur de faisceau (1) selon l'une quelconque des revendications 6 à 8.

10. Dispositif électronique, comprenant la caméra selon la revendication 9.
